# EUROPEAN PATENT SPECIFICATION

(11) **EP 2 769 886 B1**
(45) Date of publication and mention of the grant of the patent: **26.04.2017**
(21) Application number: 13156193.8
(22) Date of filing: 21.02.2013
(51) Int. Cl.: B60R 21/36

(54) **An inflatable airbag for a motor vehicle safety device**
Aufblasbarer Airbag für eine Sicherheitsvorrichtung eines Kraftfahrzeugs
Airbag gonflable pour dispositif de sécurité de véhicule à moteur

(43) Date of publication of application: 27.08.2014
(73) Proprietor: Autoliv Development AB, 447 83 Vårgårda (SE)
(72) Inventor: Lindberg, Ken, SE-441 46 Alingsås (SE); Östling, Martin, SE-507 33 Brämhult (SE); Warm, Annika, SE-447 34 Vårgårda (SE)
(74) Representative: Parry, Simon James

(56) References cited:
- EP-A1- 1 314 616
- EP-A1- 1 698 526
- DE-A1- 10 102 597
- DE-A1-102011 101 627
- US-A1- 2007 296 186

## Description

The present invention relates to an inflatable airbag for a motor vehicle safety device, and more particularly relates to such an airbag of a configuration having first and second discrete inflatable chambers.

The airbag of the present invention is particularly suitable for use as a pedestrian airbag.

When a motor vehicle is involved in a frontal impact with a pedestrian, it is known to be common for the body of the pedestrian to strike the windscreen of the vehicle which can result in serious injury to the pedestrian and significant damage to the vehicle. In an attempt to alleviate this, it has been proposed to provide a motor vehicle with a so-called pedestrian airbag of a type which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet. The rear of the hood or bonnet may be lifted by a suitable air-bag, piston or other arrangement to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Alternatively, it is also possible to configure the pedestrian airbag such that as it begins inflation it performs the hood-lifting function itself. Such an arrangement may incorporate a cell structure to the pedestrian airbag beneath the hood, or may comprise a structure adjacent the airbag to guide the airbag for inflation in a direction effective to lift the rear part of the hood or bonnet.

As will be appreciated, however, whilst pedestrian airbags of the type described above generally provide effective protection to a pedestrian in the event that the pedestrian should strike the windscreen in the event of an accident, because they deploy rearwardly from beneath the hood or bonnet of the vehicle, they are not effective in providing protection to a pedestrian from impact with the hood or bonnet itself. Whilst some progress has been made in reducing the risk of injury to a pedestrian striking the hood or bonnet by raising the hood or bonnet so that it becomes spaced further from the underlying engine in the event of an accident, the rear edge part of the hood or bonnet sill represents a significant injury risk. It is therefore considered advantageous to be able to provide an airbag configured to deploy from beneath the hood or bonnet, where it can relatively easily be stowed prior to use, into a position in which it provides protection to a pedestrian from impact with the rear part of the hood or bonnet.

EP1698526A1 proposes airbag arrangements in which a plurality of airbags are arranged in a colliding direction to provide sufficient cushion thickness in an inflated state. The document includes such arrangements as pedestrian airbag arrangements to provide protection to pedestrians.

DE10102597A1 discloses a multi-chamber airbag device stored under the bonnet of a car which upon actuation inflates to raise the bonnet and inflate a windscreen protector airbag to cover part of the windscreen.

It is a preferred object of the present invention to provide an improved inflatable airbag for a motor vehicle safety device.

According to the present invention, there is provided an inflatable airbag in combination with a motor vehicle having a hood/bonnet (29), the airbag having discrete first (8) and second (23) inflatable chambers, each chamber being made from flexible sheet material (1, 14), the first chamber (8) having an inlet (9) for fluid connection to a source of inflating gas, and the second chamber (23) being fluidly connected to the first chamber (8) in a serial configuration via a connection having at least one flow port (32) arranged between the chambers such that upon deployment of the airbag the first chamber (8) is at least partially inflated before the second chamber (23) and the second chamber (23) becomes inflated by a flow of gas from the first chamber (8) via the at least one flow port (32), wherein at least the second chamber (23) is configured to have an elongate inflated shape in cross-section, said elongate shape having a major axis (26) and a minor axis (27) orthogonal to the major axis, wherein said connection is configured such that the flexible sheet material (1) of said first chamber (8) is connected (28) to the flexible sheet material (14) of said second chamber (23) around said at least one flow port (32) and said at least one flow port (32) is spaced from both said major axis (26) and said minor axis (27) of the second chamber (23); the airbag being characterised in that it is configured to adopt a cranked configuration in cross-section in which it wraps around a rear edge of the hood/bonnet such that said second chamber (23) is arranged to deploy over a rear part of the hood/bonnet (29) to provide protection, in the region of said rear part of the hood/bonnet, to a pedestrian in the event of a collision between the vehicle and the pedestrian.

Advantageously, the first chamber is arranged to deploy beneath or behind the rear-edge region (30) of the hood/bonnet.

Preferably, said connection between the first and second chambers is configured such that said at least one flow port lies in a plane making an acute angle to said major axis of the second chamber when the airbag is inflated.

Said first chamber is also configured to have an elongate inflated shape in said cross-section, said elongate shape of the first chamber having a major axis and a minor axis orthogonal to the major axis, and wherein said at least one flow port is spaced from both the major axis and the minor axis of the first chamber when the chamber is inflated.

Conveniently, said connection between the first and second chambers is configured such that said plane in which the at least one flow port lies also makes an acute angle to the major axis of the first chamber when the airbag is inflated

Said connection between the first and second chambers is configured such that the major axes of the chambers make an acute angle to one another when the chambers are both inflated.

Advantageously, said connection is configured such that said plane in which the at least one flow port lies bisects the acute angle between the major axes of the first and second chambers.

Said first chamber is configured to have a circular shape in said cross-section through the at least one flow port.

Preferably, the second chamber is internally sub-divided into a plurality of discrete inflatable cells.

Advantageously, said second chamber is sub-divided by an internal baffle.

The airbag is arranged to deploy around the rear edge region of the hood/bonnet such that the rear edge region of the hood/bonnet lies within the acute angle made between the major axes of the first and second chambers.

Advantageously, said second chamber has a longer dimension in the transverse direction of the vehicle than the first chamber.

It is to be appreciated, however, that airbags in accordance with the present invention can be provided on or in combination with a motor vehicle in other arrangements apart from as a pedestrian protection airbag. For example, it is envisaged that airbags in accordance with the present invention may be particularly suitable for use as so-called "knee-airbags" configured for deployment from the dashboard or other internal trim element for inflation in front of the knees of the driver or a passenger of the vehicle in order to provide protection to the knees in the event of a crash involving the motor vehicle.

Preferably, the first chamber has an internal volume which is smaller than the internal volume of the second chamber.

So that the invention may be more readily understood, and so that further features thereof may be appreciated, embodiments of the invention will now be described by way of example with reference to the accompanying drawings in which:
Figure 1 is a plan view showing a first sheet of fabric used to make a first inflatable chamber of an airbag in accordance with the present invention;
Figure 2 is a plan view showing the sheet of fabric of figure 1 folded in half to create the first inflatable chamber;
Figure 3 is a transverse cross-sectional view taken along line III-III of figure 2, showing the inflated shape of the first chamber;
Figure 4 is a plan view showing a second sheet of fabric used in the construction of a second inflatable chamber of the airbag;
Figure 5 is a plan view of a third sheet of fabric which is also used in the construction of the second inflatable chamber;
Figure 6 is a schematic illustration showing the second and third sheets of figures 1 and 2 forming the second inflatable chamber;
Figure 7 is a transverse cross-sectional view taken along line VII-VII of figure 6, showing the inflated shape of the second chamber;
Figure 8 is a plan view showing the second chamber of figure 6 partially superimposed on the first chamber of figure 2; the two chambers being interconnected to create the airbag;
Figure 9 is a transverse cross-sectional view taken along line IX-IX of figure 8, showing the entire airbag in its inflated condition, and relative to the hood or bonnet of a motor vehicle;
Figure 10 is a perspective view showing a slightly modified variant of the airbag illustrated in figure 8 deployed over the rear part of the hood or bonnet of a motor vehicle; and
Figure 11 is a cross-sectional view corresponding generally to that of figure 9 but which illustrated another alternative embodiment.

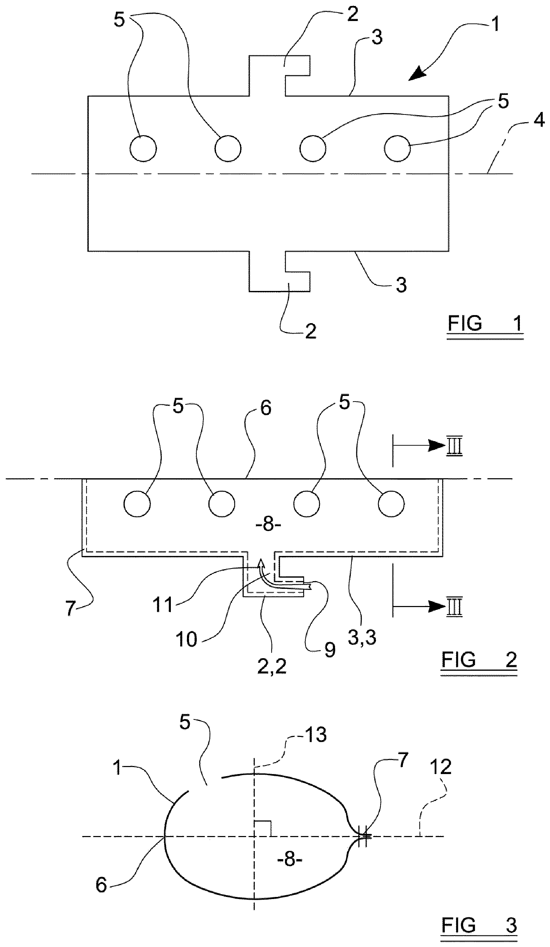

Referring initially to figure 1, there is illustrated a first sheet 1 of flexible material used in the construction of the airbag. The flexible material is preferably woven fabric material, although it is to be appreciated that alternative materials could be used instead. The sheet 1 is elongate and generally rectangular in form. It will be noted, however, that a generally L-shaped tab 2 projects outwardly from a central position along each of the two long side edges 3 of the sheet. The shape of the sheet 1, and in particular the orientation of the two projecting tabs 2, is mirror symmetrical about the longitudinal axis 4 of the sheet.

It will be noted from figure 1 that one longitudinal half of the sheet 1 is provided with a plurality of spaced-apart apertures 5, the apertures being arranged in a line generally parallel to the longitudinal axis 4 of the sheet. The apertures 5 are positioned so that they are closer to the longitudinal axis 4 than they are to the nearest long side edge 3 of the sheet.

Figure 2 shows the sheet 1 folded in half about its longitudinal axis to define a lengthwise extending fold 6. The two longitudinal halves of the sheet are thus superimposed such that the long side edges 3 and their associated projecting tabs 2 become aligned with one another as illustrated. Figure 2 shows the folded sheet 1 as viewed from above, with the upper half of the sheet as illustrated in figure 1 superimposed on top of the lower half of the sheet as illustrated in figure 1. It will thus be seen that the apertures 5 are provided through the top half of the folded sheet as viewed in figure 2.

The superimposed halves of the folded sheet 1 are interconnected along their aligned side edges by a peripheral seam 7 to define a first inflatable chamber 8 between the two folded halves of the sheet 1. The peripheral seam may be formed via stitching, adhesive, or even heat-fusion of the fabric. The peripheral seam 7 does not run across the aligned end edges of the two projecting tabs 2, and so at this position an inlet aperture 9 is defined between the end edges of the tabs 2 through which inflating gas can flow into the chamber 8 from an inflator (not shown) in a manner known per se. The interconnected tabs 2 thus define a neck region 10 of the chamber 8 which serves to direct inflating gas into the main part of the chamber 8 as indicated schematically by arrow 11.

Figure 3 illustrates the transverse cross-sectional shape (as viewed along line III-III in figure 2 through one of the apertures 5) which the first inflatable chamber 8 will assume when substantially fully inflated, ignoring at present the effect of any inflating gas escaping through the apertures 5. As will be noted, the chamber 8 adopts an elongate and generally ovoid configuration in its inflated condition, having a major axis 12 which runs through the peripheral seam 7 where it interconnects edges 3 and the (now unfolded) fold line 6, and a minor axis 13 which is orthogonal to the major axis 12.

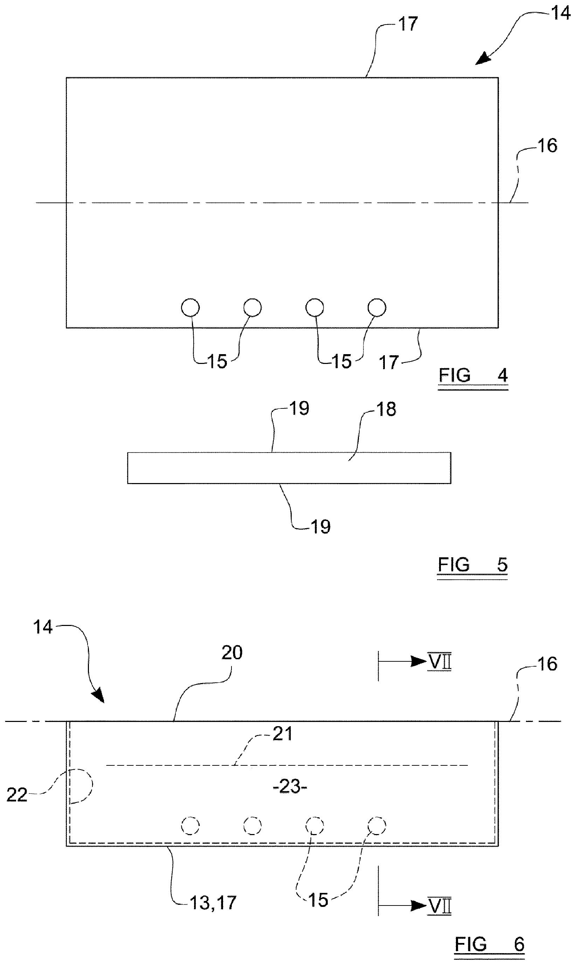

Turning now to consider figure 4, there is illustrated a second sheet 14 of similar flexible material as the first sheet 1 described above. The second sheet 14 is again elongate and rectangular in form but is significantly larger than the first sheet 1, both in terms of its length and its width. The second sheet 14 is also provided with a plurality of spaced-apart apertures 15, the apertures being arranged in a line generally parallel to the longitudinal axis 16 of the sheet and running adjacent the lower of the two long side edges 17 in the orientation of the sheet shown in figure 4. The apertures 15 in the second sheet 14 are equal in number, their size, and their spacing to the apertures 5 provided in the first sheet 1.

Figure 5 illustrates a third sheet 18 of flexible material similar to the flexible material of the first and second sheets 1, 14. The third sheet 18 is again elongate and rectangular in form, but has a much higher aspect ratio on the sense that it is significantly narrower in width, particularly as compared to the second sheet 14. The third sheet is slightly shorter in length than the second sheet 14 and has two parallel long side edges 19.

Figure 6 shows the second sheet 14 folded in half about its longitudinal axis 16 to define a lengthwise extending fold 20. The two longitudinal halves of the sheet are thus superimposed such that their long side edges 17 become aligned. Figure 6 shows the folded sheet 14 as viewed from above, with the upper half of the sheet as illustrated in figure 4 superimposed on top of the lower half of the sheet as illustrated in figure 4. It will thus be noted that the apertures 15 are provided through the lower half of the folded sheet as viewed in figure 6, and are hence shown in phantom.

The third sheet 18 is shown inserted between the two folded halves of the second sheet 14 in figure 6. In particular it is to be noted that the third sheet is actually connected along one of its long side edges 19 to the top folded half of the second sheet 14, and is connected along its other side edge 19 to the bottom folded half of the second sheet. Preferably, this connection is achieved by creating a seam 21 interconnecting each side edge 19 of the third sheet to the respective half of the second sheet 14 as denoted in figure 6, such that the third sheet effectively extends between the two folded halves of the second sheet. The seam 21 is preferably formed by stitching, but can alternatively be formed by the use of adhesive or even heat-fusion of the fabric sheets.

After the third sheet 18 is connected between the two folded halves of the second sheet, the superimposed halves of the second sheet 14 are then interconnected along their aligned side edges by a peripheral seam 22 to define a second inflatable chamber 23 between the two folded halves of the sheet 14. The peripheral seam may be formed via stitching, adhesive, or even heat-fusion of the fabric.

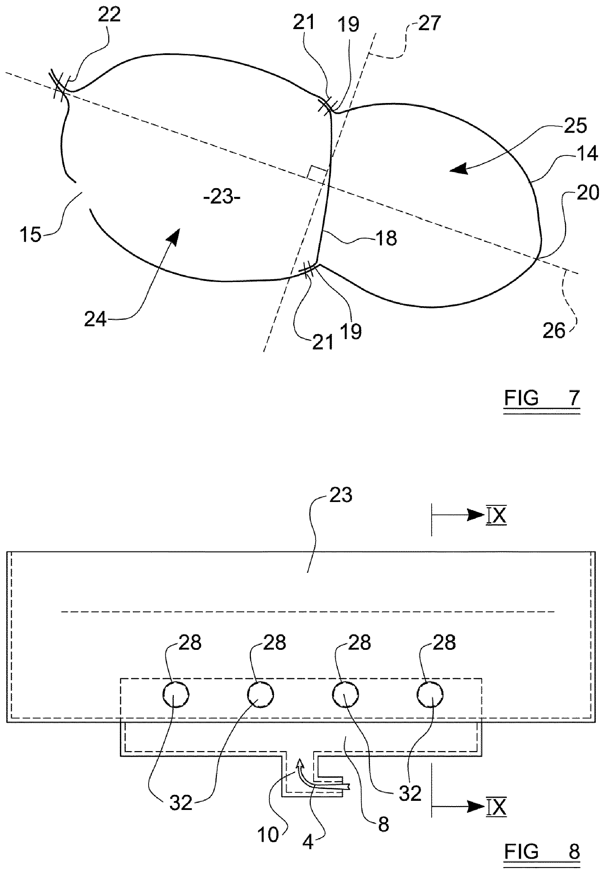

Figure 7 illustrates the transverse cross-sectional shape (as viewed along line VII-VII in figure 6 through one of the apertures 15) which the second inflatable chamber 23 will assume when substantially fully inflated. As will be noted, the third sheet 18 is drawn tight between the folded halves of the second sheet 14 which themselves effectively define top and bottom panels to the second chamber 23. The third sheet 18 thus serves to tether the middle region of the top and bottom panels with respect to one another as the chamber 23 gains thickness upon inflation. The third sheet 18 can furthermore be seen to define a baffle which internally sub-divides the second chamber 23 into two discrete inflatable cells, namely a first cell 24 proximate the apertures 15, and a second cell 25 distal to the apertures 15 and on the opposite side of the baffle 18. As will be appreciated from figure 6, as the second chamber 23 is inflated by the flow of inflating gas through the apertures 15, the baffle 18 ensures that the first cell 24 begins to inflate before the gas is then permitted to flow around the outer ends of the baffle 18 to inflate the second cell 25. This sort of baffle arrangement to sub-divide an airbag is known *per se* in the field of pedestrian airbags.

Despite the function of the baffle 18 described above, it will be noted that the second chamber adopts an elongate and generally ovoid configuration in its inflated condition, having a major axis 26 which runs through the peripheral seam 22 where it interconnects the edges 17, and the (now unfolded) fold line 20, and a minor axis 27 which is orthogonal to the major axis 26.

Turning now to consider figure 8, the above-described second chamber 23 is shown in its flat and uniflated condition superimposed over part of the first chamber 8 which is also shown in its flat and uniflated condition. The two chambers 8, 23 are arranged such that the apertures 5 in the upper region of the first chamber are aligned with respective apertures 15 in the lower region of the second chamber 23. The two chambers 8, 23 are connected to one another in this orientation by lines of stitching 28 running around the aligned apertures 5, 15. It is to be appreciated that a more secure connection between the two chambers 8, 23 can be provided by creating more seams between the fabric of the two chambers, although for the sake of simplicity these are not shown in figure 8.

In the case that the airbag of the present invention is to be used as a pedestrian airbag to provide protection to a pedestrian in the event of the vehicle striking the pedestrian, then the above-described airbag will be folded and/or rolled into a tightly packed package which will be provided in a stowed position beneath the rear part of the hood or bonnet of a motor vehicle. The inlet aperture 9 of the neck 10 of the first chamber will be fluidly connected to an inflator in a manner known *per se*.

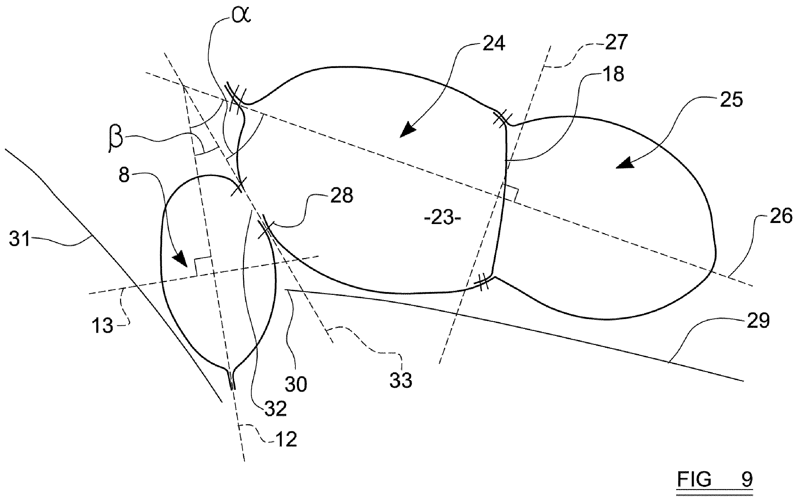

The inflation characteristic of the airbag will now be described with particular reference to figure 8 and figure 9 which is a cross sectional view through the airbag along line IX-IX in figure 8, and which shows the airbag in its deployed position with respect to the hood or bonnet 29 of the vehicle.

Upon actuation of the inflator in the event of an accident requiring deployment of the airbag, a large volume of gas will very rapidly be injected by the inflator (not shown) into the first chamber 8 of the airbag via the neck 10, as illustrated by arrow 11 in figure 8. The first chamber will thus very rapidly inflate to adopt the position illustrated in figure 9 in which extends rearwardly from beneath the rear part of the hood or bonnet 29 so as to extend past the rear edge 30 of the hood or bonnet 29. The first chamber 8 may rest against the windscreen 31 of the vehicle in this position, the windscreen thereby providing support to the chamber 8.

As the first chamber 8 inflates into its deployed position illustrated in figure 9, it will pull with it the still folded/rolled fabric of the second chamber 23, so that the second chamber is also moved rearwardly from beneath the hood or bonnet 29 ready for inflation.

As will be appreciated, the second chamber 23 is effectively connected to the first chamber 8 in a serial configuration, such that it become inflated via secondary flows of gas flowing from the first chamber 8 to the second chamber 23 via the aligned and interconnected apertures 5, 15 which combine to define flow ports 32 between the two chambers 8, 23. The second chamber 23 thus begins to inflate to its deployed condition illustrated in figure 9 only after substantial inflation of the first chamber 8.

It is to be appreciated at this juncture that the position of the apertures 5, 15 which cooperate to define the flow ports 32 illustrated in figure relative to the two chambers 8, 23 imparts a particular inflation characteristic to the airbag. As will be noted from figure 9 in particular, the flow ports 32 are each spaced from both the major axis 26 and the orthogonal minor axis 27 of the second chamber 23. This position of the flow ports relative to the axes 26, 27, combined with the generally ovoid shape of the second chamber 23 as it achieves substantially full inflation means that the flow ports 15 each lie in a plane, denoted by dashed line 33 in figure 9, which makes an acute angle α to the major axis of the second chamber 23.

It will furthermore be noted that the flow ports 15 are each similarly spaced from both the major axis 12 and the minor axis 13 of the first chamber 8. This position of the flow ports 15, combined with the generally ovoid shape of the first chamber 8 as it achieves substantially full inflation means that the plane 33 in which the flow ports 15 lie also makes an acute angle P to the major axis 13 of the first chamber 8.

Noting that the two chambers 8, 23 are interconnected by the seams 28 around the flow ports 15, and hence in the plane 33, the structure of the airbag is thus configured to impart a somewhat "bent" or "cranked" shape to the airbag in the sense that the second chamber 23 is caused to inflate into a position as illustrated in figure 9 in which the major axes 12, 26 of the two chambers 8, 23 make an acute angle θ to one another. The airbag thus effectively adopts a cranked configuration in cross-section in which it wraps around the rear edge 30 of the hood or bonnet 29 such that the second chamber 23 deploys over the rear part of the hood or bonnet to provide protection to a pedestrian in that region of the vehicle. The rear edge region of the hood or bonnet 29 can thus be seen to lie within the acute angle θ between the major axes 12, 26 of the two chambers 8, 23.

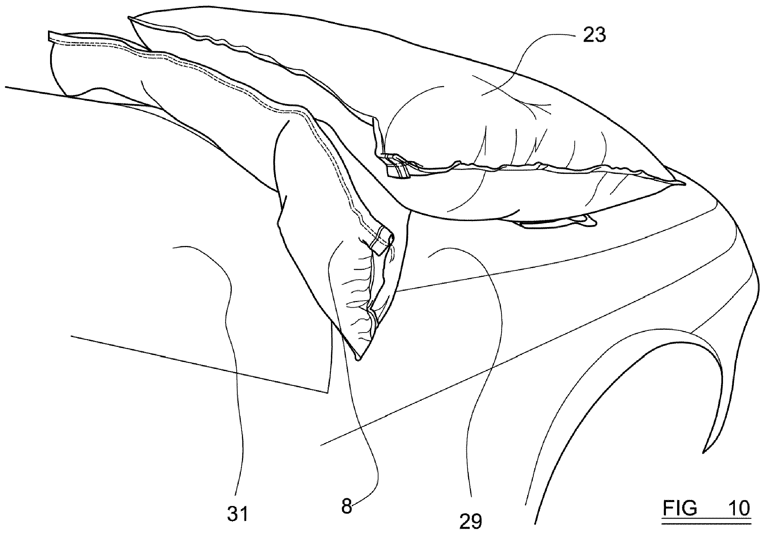

Figure 10 illustrates a similar airbag in its fully inflated and deployed configuration, where it can be seen that the first chamber 8 rests against the windscreen 31 for support and the second chamber 23 deploys over the rear part of the hood or bonnet 29. It will be noted, however, that the actual airbag illustrated in figure 10 is slightly different from the embodiment described above, because its first chamber 8 is of approximately equal length (in the transverse direction across the vehicle) as the second chamber 23, whereas in the embodiment described above with reference to figures 1 to 9 the first chamber is significantly shorter than the second chamber 23. In other respects the two embodiments are identical.

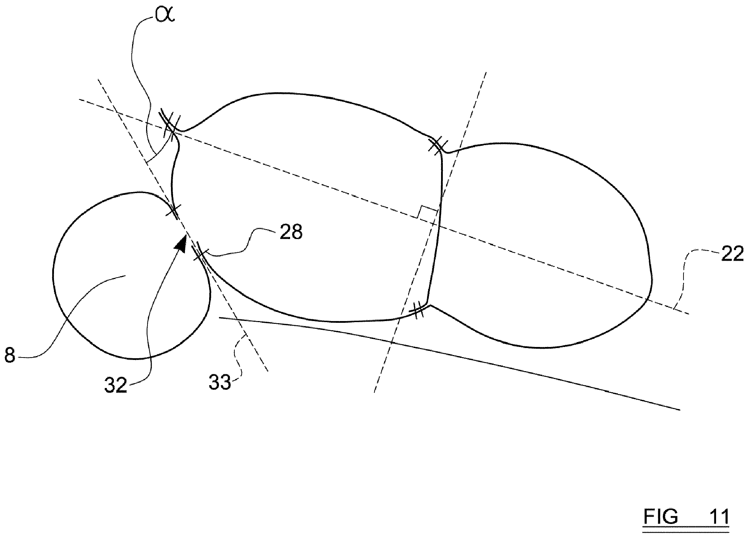

Figure 11 is similar to figure 9 but shows another alternative embodiment in which the first chamber 8 has a generally circular transverse cross-section through any of the flow ports 32, rather than the elongate and generally ovoid configuration of the previously described embodiment.

Whilst the invention has been described above with reference to specific embodiments, it is to be appreciated that various changes can be made without departing from the scope of the claimed invention. For example, whilst the above-described embodiments are constructed with the use of seams which are preferably stitched but which could be formed using adhesive or heat-fusion, the respective chambers of the airbag could alternatively be formed by a so-called one-piece weaving technique in which the various seams formed between sheets and/or superimposed layers can be woven integrally with the structure of the various sheets as the sheets themselves are woven.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. An inflatable airbag provided in combination with a motor vehicle having a hood/bonnet (29), the airbag having discrete first (8) and second (23) inflatable chambers made from flexible sheet material (1, 14), the first chamber (8) having an inlet (9) for fluid connection to a source of inflating gas, and the second chamber (23) being fluidly connected to the first chamber (8) in a serial configuration via a connection having at least one flow port (32) arranged between the chambers such that upon deployment of the airbag the first chamber (8) is at least partially inflated before the second chamber (23) and the second chamber (23) becomes inflated by a flow of gas from the first chamber (8) via the at least one flow port (32), wherein the second chamber (23) is configured to have an elongate inflated shape in cross-section, said elongate shape having a major axis (26) and a minor axis (27) orthogonal to the major axis, said connection being configured such that the flexible sheet material (1) of said first chamber (8) is connected (28) to the flexible sheet material (14) of said second chamber (23) around said at least one flow port (32); the airbag being **characterised in that** said first chamber (8) is also configured to have an elongate inflated shape in said cross-section, said elongate shape of the first chamber having a major axis (12) and a minor axis (13) orthogonal to the major axis, and said at least one flow port (32) is spaced from said major axes (12, 26) and said minor axes (13, 27) of the first and second chambers (8, 23); said connection (28) between the first and second chambers (8, 23) being configured such that the major axes (12, 26) of the chambers (8, 23) make an acute angle to one another when the chambers (8, 23) are both inflated, and the airbag being arranged to deploy around a rear edge region (30) of the hood/bonnet (29) such that the rear edge region (30) of the hood/bonnet lies within the acute angle made between the major axes (12, 26) of the first and second chambers (8, 23).

2. An inflatable airbag according to claim 1, wherein the first chamber (8) is arranged to deploy beneath or behind the rear edge region (30) of the hood/bonnet (29).

3. An inflatable airbag according to claim 1 or claim 2, configured to adopt a bent configuration in cross-section in which it wraps around a rear edge of the hood/bonnet such that said second chamber (23) is arranged to deploy over a rear part of the hood/bonnet to provide protection, in the region of said rear part of the hood/bonnet, to a pedestrian in the event of collision between the vehicle and the pedestrian.

4. An inflatable airbag according to any preceding claim, wherein said connection (28) between the first and second chambers (8, 23) is configured such that said at least one flow port (32) lies in a plane (33) making an acute angle (a) to said major axis (26) of the second chamber (23) when the airbag is inflated.

5. An inflatable airbag according to claim 4, wherein said connection (28) between the first and second chambers (8, 23) is configured such that said plane (33) in which the at least one flow port (32) lies also makes an acute angle β to the major axis (12) of the first chamber (8) when the airbag is inflated.

6. An inflatable airbag according to claim 4 or claim 5, wherein said connection (28) is configured such that said plane (33) in which the at least one flow port (32) lies bisects the acute angle between the major axes (12, 26) of the first and second chambers (8, 23).

7. An inflatable airbag according to any preceding claim, wherein the second chamber (23) is internally sub-divided into a plurality of discrete inflatable cells (24, 25).

8. An inflatable airbag according to claim 7, wherein said second chamber (23) is subdivided by an internal baffle (18).

9. An inflatable airbag according to any preceding claim, wherein said second chamber (23) has a longer dimension in the transverse direction of the vehicle than the first chamber (8).

10. An inflatable airbag according to any preceding claim, wherein the first chamber (8) has an internal volume which is smaller than the internal volume of the second chamber (23).

## Patentansprüche

1. Aufblasbarer Airbag, der in Verbindung mit einem Kraftfahrzeug vorgesehen ist, das eine Motorhaube (29) aufweist, wobei der Airbag eine getrennte erste (8) und zweite (23) aufblasbare Kammer aus einem flexiblen Bahnmaterial (1, 14) aufweist, wobei die erste Kammer (8) einen Einlass (9) zur Fluidverbindung mit einer Quelle von Füllgas aufweist und die zweite Kammer (23) fluidmäßig mit der ersten Kammer (8) in einer Reihenanordnung über eine Verbindung verbunden ist, die mindestens eine Strömungsöffnung (32) aufweist, die zwischen den Kammern derart angeordnet ist, dass beim Entfalten des Airbags die erste Kammer (8) zumindest teilweise vor der zweiten Kammer (23) aufgeblasen wird und die zweite Kammer (23) durch einen Gasstrom von der ersten Kammer (8) über die mindestens eine Strömungsöffnung (32) aufgeblasen wird, wobei die zweite Kammer (23) so ausgelegt ist, dass sie im Querschnitt eine längliche aufgeblasene Form aufweist, wobei die längliche Form eine Hauptachse (26) und eine Nebenachse (27) rechtwinklig zur Hauptachse aufweist, wobei die Verbindung derart ausgelegt ist, dass das flexible Bahnmaterial (1) der ersten Kammer (8) mit dem flexiblen Bahnmaterial (14) der zweiten Kammer (23) um die mindestens eine Strömungsöffnung (32) herum verbunden (28) ist; wobei der Airbag **dadurch gekennzeichnet ist, dass** die erste Kammer (8) auch so ausgelegt ist, dass sie in dem Querschnitt eine längliche aufgeblasene Form aufweist, wobei die längliche Form der ersten Kammer eine Hauptachse (12) und eine Nebenachse (13) rechtwinklig zur Hauptachse aufweist, und die mindestens eine Strömungsöffnung (32) einen Abstand zu den Hauptachsen (12, 26) und den Nebenachsen (13, 27) der ersten und zweiten Kammer (8, 23) aufweist; wobei die Verbindung (28) zwischen der ersten und zweiten Kammer (8, 23) so ausgelegt ist, dass die Hauptachsen (12, 26) der Kammern (8, 23) einen spitzen Winkel zueinander bilden, wenn die Kammern (8, 23) beide aufgeblasen sind, und wobei der Airbag so angeordnet ist, dass er sich um einen Hinterkantenbereich (30) der Motorhaube (29) derart entfaltet, dass der Hinterkantenbereich (30) der Motorhaube innerhalb des spitzen Winkels liegt, der zwischen den Hauptachsen (12, 26) der ersten und zweiten Kammer (8, 23) gebildet ist.

2. Aufblasbarer Airbag nach Anspruch 1, wobei die erste Kammer (8) so angeordnet ist, dass sie sich unter oder hinter dem Hinterkantenbereich (30) der Motorhaube (29) entfaltet.

3. Aufblasbarer Airbag nach Anspruch 1 oder Anspruch 2, der so ausgelegt ist, dass er im Querschnitt eine gebogene Gestalt annimmt, in der er derart um eine Hinterkante der Motorhaube gelegt ist, dass die zweite Kammer (23) so angeordnet ist, dass sie sich über einen hinteren Teil der Motorhaube entfaltet, um in dem Bereich des hinteren Teils der Motorhaube einen Fußgänger im Fall eines Zusammenstoßes zwischen dem Fahrzeug und dem Fußgänger zu schützen.

4. Aufblasbarer Airbag nach einem der vorhergehenden Ansprüche, wobei die Verbindung (28) zwischen der ersten und zweiten Kammer (8, 23) so ausgelegt ist, dass die mindestens eine Strömungsöffnung (32) in einer Ebene (33) liegt, die einen spitzen Winkel (α) mit der Hauptachse (26) der zweiten Kammer (23) bildet, wenn der Airbag aufgeblasen ist.

5. Aufblasbarer Airbag nach Anspruch 4, wobei die Verbindung (28) zwischen der ersten und zweiten Kammer (8, 23) so ausgelegt ist, dass die Ebene (33), in der die mindestens eine Strömungsöffnung (32) liegt, ebenfalls einen spitzen Winkel β mit der Hauptachse (12) der ersten Kammer (8) bildet, wenn der Airbag aufgeblasen ist.

6. Aufblasbarer Airbag nach Anspruch 4 oder Anspruch 5, wobei die Verbindung (28) so ausgelegt ist, dass die Ebene (33), in der die mindestens eine Strömungsöffnung (32) liegt, den spitzen Winkel zwischen den Hauptachsen (12, 26) der ersten und zweiten Kammer (8, 23) schneidet.

7. Aufblasbarer Airbag nach einem der vorhergehenden Ansprüche, wobei die zweite Kammer (23) innen in eine Mehrzahl getrennter aufblasbarer Zellen (24, 25) unterteilt ist.

8. Aufblasbarer Airbag nach Anspruch 7, wobei die zweite Kammer (23) durch ein inneres Leitelement (18) unterteilt ist.

9. Aufblasbarer Airbag nach einem der vorhergehenden Ansprüche, wobei die zweite Kammer (23) in der Querrichtung des Fahrzeugs eine längere Abmessung aufweist als die erste Kammer (8).

10. Aufblasbarer Airbag nach einem der vorhergehenden Ansprüche, wobei die erste Kammer (8) ein Innenvolumen aufweist, das kleiner als das Innenvolumen der zweiten Kammer (23) ist.

## Revendications

1. Coussin gonflable de sécurité prévu en association avec un véhicule motorisé possédant un capot (29), le coussin de sécurité présentant des première (8) et deuxième (23) chambres gonflables discontinues réalisées dans une matière souple en feuille (1, 14), la première chambre (8) possédant une bouche d'entrée (9) destinée à être en communication fluidique avec une source de gaz de gonflage et la deuxième chambre (23) étant en communication fluidique avec la première chambre (8) dans une configuration en série par l'intermédiaire d'une jonction présentant au moins un orifice d'écoulement (32) disposé entre les chambres de manière que, lors du déploiement du coussin de sécurité, la première chambre (8) se gonfle au moins partiellement avant la deuxième chambre (23), et la deuxième chambre (23) se gonfle sous l'effet d'un écoulement de gaz issu de la première chambre (8) et traversant l'au moins un orifice d'écoulement (32), ladite deuxième chambre (23) étant configurée pour présenter une forme gonflée allongée en section transversale, ladite forme allongée présentant un axe majeur (26) et un axe mineur (27) orthogonal à l'axe majeur, ladite jonction étant configurée de sorte que la matière souple en feuille (1) de ladite première chambre (8) soit jointe (28) à la matière souple en feuille (14) de ladite deuxième chambre (23) autour dudit au moins un orifice d'écoulement (32) ; le coussin de sécurité étant **caractérisé en ce que** ladite première chambre (8) est également configurée pour présenter une forme gonflée allongée dans ladite section transversale, ladite forme allongée de la première chambre possédant un axe majeur (12) et un axe mineur (13) orthogonal à l'axe majeur, et ledit au moins un orifice d'écoulement (32) est distant à la fois desdits axes majeurs (12, 26) et desdits axes mineurs (13, 27) des première et deuxième chambres (8, 23) ; ladite jonction (28) entre les première et deuxième chambres (8, 23) étant configurée de sorte que les axes majeurs (12, 26) des chambres (8, 23) constituent un angle aigu entre eux lorsque les chambres (8, 23) sont toutes deux gonflées, et le coussin de sécurité étant conçu pour se déployer autour d'une zone de bord arrière (30) du capot (29) de manière que la zone de bord arrière (30) du capot se trouve à l'intérieur de l'angle aigu constitué entre les axes majeurs (12, 26) des première et deuxième chambres (8, 23).

2. Coussin gonflable de sécurité selon la revendication 1, dans lequel la première chambre (8) est conçue pour se déployer sous ou derrière la zone de bord arrière (30) du capot (29).

3. Coussin gonflable de sécurité selon la revendication 1 ou la revendication 2, configuré pour adopter une configuration coudée en section transversale dans laquelle il enveloppe un bord arrière du capot de manière que ladite deuxième chambre (23) est conçue pour se déployer sur une partie arrière du capot afin d'offrir une protection, aux alentours de ladite partie arrière du capot, à un piéton dans l'éventualité d'une collision entre le véhicule et le piéton.

4. Coussin gonflable de sécurité selon l'une quelconque des revendications précédentes, dans lequel ladite jonction (28) entre les première et deuxième chambres (8, 23) est configurée de sorte que ledit au moins un orifice d'écoulement (32) se trouve dans un plan (33) constituant un angle aigu (α) avec ledit axe majeur (26) de la deuxième chambre (23) une fois le coussin de sécurité gonflé.

5. Coussin gonflable de sécurité selon la revendication 4, dans lequel ladite jonction (28) entre les première et deuxième chambres (8, 23) est configurée de sorte que ledit plan (33) dans lequel se trouve l'au moins un orifice d'écoulement (32) constitue également un angle aigu (β) avec l'axe majeur (12) de la première chambre (8) une fois le coussin de sécurité gonflé.

6. Coussin gonflable de sécurité selon la revendication 4 ou la revendication 5, dans lequel ladite jonction (28) est configurée de sorte que ledit plan (33) dans lequel se trouve l'au moins un orifice d'écoulement (32) coupe l'angle aigu entre les axes majeurs (12, 26) des première et deuxième chambres (8, 23).

7. Coussin gonflable de sécurité selon l'une quelconque des revendications précédentes, dans lequel la deuxième chambre (23) est subdivisée dans son intérieur en une pluralité de compartiments gonflables (24, 25) discontinus.

8. Coussin gonflable de sécurité selon la revendication 7, dans lequel ladite deuxième chambre (23) est subdivisée par une cloison interne (18).

9. Coussin gonflable de sécurité selon l'une quelconque des revendications précédentes, dans lequel ladite deuxième chambre (23) présente une dimension dans le sens transversal du véhicule qui est plus longue que celle de la première chambre (8).

10. Coussin gonflable de sécurité selon l'une quelconque des revendications précédentes, dans lequel la première chambre (8) présente un volume interne qui est inférieur au volume interne de la deuxième chambre (23).
